Europäisches Patentamt

European Patent Office

Office européen des brevets

(19)

(11) Publication number: **0 256 737 B1**

# EUROPEAN PATENT SPECIFICATION

(12)

(45) Date of publication of patent specification: **24.03.93** (51) Int. Cl.5: **G01N 27/26**

(21) Application number: **87306847.2**

(22) Date of filing: **03.08.87**

(54) **Electrophoresis using contour-clamped homogeneous or inhomogeneous electric fields.**

(30) Priority: **13.08.86 US 896523**

(43) Date of publication of application:
**24.02.88 Bulletin 88/08**

(45) Publication of the grant of the patent:
**24.03.93 Bulletin 93/12**

(84) Designated Contracting States:
**AT BE CH DE ES FR GB GR IT LI LU NL SE**

(56) References cited:
WO-A-84/02001
DE-A- 2 013 840
US-A- 4 148 703
US-A- 4 670 119

SCIENCE, vol. 234, 19th December 1986,
pages 1582-1585; G. CHU et al.: "Separation
of large DNA molecules by contour-clamped
homogeneous electric fields"

(73) Proprietor: **THE BOARD OF TRUSTEES OF THE
LELAND STANFORD JUNIOR UNIVERSITY**
**350 Cambridge Avenue, Suite 250**
**Palo Alto, California 94306(US)**

(72) Inventor: **Chu, Gilbert**
**3820 Park Boulevard**
**Palo Alto California 94306(US)**
Inventor: **Vollrath, Douglas**
**975 Florence Lane Apartment C**
**Menlo Park California 94025(US)**
Inventor: **Davis, Ronald W.**
**433 Kingsley**
**Palo Alto California 94301(US)**

(74) Representative: **Harrison, David Christopher
et al**
**MEWBURN ELLIS 2 Cursitor Street**
**London EC4A 1BO (GB)**

## Description

This invention is in the field of gel electrophoresis and pertains to a method and apparatus for controlling the migration of particles by manipulating the shape and orientation of the electric field in the gel.

Gel electrophoresis is capable of separating macromolecules such as proteins and nucleic acids on the basis of size, charge, and/or conformation. Most applications involve the use of a single pair of electrodes to generate the electric field. Such a field is necessarily constrained to be uniform and oriented in a single direction, and as a result conventional techniques are limited in many respects.

For example, conventional electrophoresis is not capable of resolving DNA fragments much larger than 50 kilobases. The recent introduction of new electrode configurations which generate electric fields in alternating orientations has allowed the separation of large DNA molecules up to 2 megabases in size. For example, US-A-4,473,452 (WO-A-8 402 001) describes an electrophoresis method of separating DNA molecules which involves the use of electric fields deliberately chosen to be nonuniform, rather than the uniform fields sought in previously known electrophoresis methods. The nonuniformity of the electric field, however, causes the DNA molecules to migrate with a mobility and a trajectory that depends on where in the gel the sample is loaded. Thus, comparison of multiple samples across the gel is difficult.

For example, conventional electrophoresis may produce distortion, with molecules at the edge of the gel migrating more slowly than those in the center. Consequently electrophoresis is often done inefficiently at voltages lower than necessary to achieve adequate resolution.

For example, conventional electrophoresis is limited in resolution by band broadening.

Also, conventional electrophoresis is not capable of identifying macromolecules with different secondary structure. Two dimensional electrophoresis has been developed for this purpose, but this method is technically difficult because it involves manipulations of the gel.

It is a principle object of the present invention to provide a method for manipulating the shape and orientation of electric fields for the purpose of controlling the migration of particles in a gel.

It is another object of the present invention to provide for the high resolution separation of macromolecules, particularly DNA molecules up to or greater than 2 megabases in size, by gel electrophoresis whereby the pattern of separation is independent of position in the gel.

It is a further object of this invention to provide a means for separating relatively small macromolecules, such as DNA of less than 50 kilobases, without distortion even at high voltage.

Yet another object of the present invention is to minimize band broadening in the electrophoretic separation of macromolecules.

A still further object of this invention is to provide a method for identifying secondary structure in macromolecules.

These and other advantages of the invention, as well as additional inventive features, will become apparent from the detailed description which follows.

The present invention is predicated in part on the discovery that the limitations inherent in the existing electrophoretic separation techniques can be overcome by applying contour-clamped homogeneous or inhomogeneous electric fields with the term "contour-clamped electric field" meaning that the electric field is generated by multiple electrodes arranged along a closed contour and clamped to pre-determined electric potentials, and with the term "homogeneous" meaning that the electric field has a uniform direction and magnitude within the closed contour.

Depending upon the particular application for the method and apparatus, the gel is subjected to a homogeneous or inhomogeneous field by clamping a plurality of electrodes at predetermined potentials, where at least two electrodes clamped to different potentials serve as the driving electrodes and the remaining electrodes clamped to intermediate potentials serve to further define the nature of the electrical field.

One significant application is the separation of large macromolecules employing a homogeneous field. The driving electrodes are clamped at potentials $\phi_1$ and $\phi_2$ corresponding to a potential difference of $\phi_0 = \phi_2 - \phi_1$.

The remaining electrodes located at intermediate positions along the polygon are clamped to intermediate potentials as determined by the equation:

$$\phi = \frac{y}{a}(\phi_2 - \phi_1) + \phi_1$$

where $\phi_1$ and $\phi_2$ are the potentials of the driving electrodes with $\phi_1$ the lower potential, "a" represents the perpendicular distance between opposing driving electrodes i.e. in a direction normal to the $\phi_1$ electrodes; and "y" represents the perpendicular distance between the intermediate electrode and the $\phi_1$ electrodes. Thus, positions along the closed contour are clamped to potentials equal to those that correspond to a homogeneous electric field. While an infinite number of electrodes would need to be arranged along the contour to provide an exactly homogeneous electric field inside the contour, as a practical matter and as demonstrated herein, a relatively small number of electrodes can generate an excellent approximation of the desired homogeneous field.

In the drawings:

Figure 1 depicts an apparatus of the present invention for the square array alternating contour-clamped homogenous electric field;

Fig. 2 shows the apparatus for the hexagonal array alternating contour-clamped homogenous electric field;

Fig. 3 shows a switching power supply for connection to the electrodes of the apparatus of Figs. 1 and 2;

Fig. 4 is a graph showing the electric potential as a function of position in the hexagonal array contour-clamped homogenous electric field;

Fig. 5 depicts an apparatus of the present invention for the nonalternating contour-clamped homogenous electric field;

Fig. 6 comprises three photographs showing the separation of yeast chromosomal DNA by: (A) orthogonal-field-alternation gel electrophoresis (Carle and Olson (1984), infra, (B) hexagonal array contour-clamped homogenous electric field electrophoresis, and (C) square array contour-clamped homogenous electric field electrophoresis; and

Fig. 7 is a graph showing the mobility of DNA chromosomes I, II, IV and XII as a function of the reorientation angle in the contour-clamped homogenous electric field.

While the invention will be described in connection with certain embodiments, it is not intended to limit the invention to those particular embodiments. On the contrary, it is intended to cover all alternatives, modifications, and equivalent arrangements thereof.

The present inventive method for identifying particles comprises subjecting the particles in a suitable medium to an electric field generated by electrodes arranged along a two-dimensional closed contour having at least two electrodes or groups of electrodes which serve as driving electrodes. Normally, the contour is polygonal and has at least two parallel sides. The driving electrodes have a potential difference $\phi_0$ imposed across them and determine the general direction of the electric field. The remaining electrodes, which are located at intermediate positions between the driving electrodes, have intermediate potentials adjusted to make the electric field either homogeneous or inhomogeneous. The thus-clamped field more effectively controls the migration of the particles, providing for improved resolution, information concerning secondary structure, as well as other advantages.

By emphasizing contour-clamped electric fields which allow for controlling and varying the shape of the electric field in the gel, substantial versatility is achieved. The contour-clamped electric field may be employed in combination with alternating fields to further expand the application of the contour-clamped electric field. By emphasizing combinations of homogeneous or inhomogeneous electric fields with alternating or non-alternating electric fields, various results can be achieved at levels superior to what presently available gel electrophoretic equipment provides. By employing a combination of a homogeneous electric field and alternating the homogeneous field, separation of very large nucleic acids can be achieved, e.g. separation of large DNA of up to and greater than 2 megabases. For separation of medium to small DNA molecules, e.g. equal to or less than about 50 kbp, a homogeneous non-alternating field provides rapid separation with high resolution. Where a homogeneous alternating field is employed, but the alternating fields are different field strengths, the particle migration may be related to secondary structure. With a non-alternating inhomogeneous field, differential resolution and/or decreased band broadening may be accomplished. Other variations with the combination of a contour-clamped electric field and alternating/non-alternating fields may also be employed for modifying the resolution, migration path and rate of separation.

When employing the term "particle", any substance capable of migrating in a gel under the influence of an electric field is intended. Thus, the particle includes both large and small molecules, from amino acids and nucleotides to large proteins and nucleic acids, e.g. chromosomes.

While for the most part, the electrodes will define a polygonal contour, such a regular two-dimensional electrode array is not required and the closed-contour may have any regular or irregular shape. However, for conveneience, a square, rectangular or hexagonal array will be used, and these polygons will serve as paradigmatic of other regular or irregular polygons.

Electrophoresis can be used for a variety of purposes, such as identifying a particle by size, charge, conformation or combinations thereof, for separating a mixture of particles, purification of particles, or the like. The electrophoresis is carried out in a gel conventionally prepared using agarose or polyacrylamide as the gelling agent, although other gelling agents may find use.

In carrying out the method of the subject invention an electric field of a desired shape is created in the gel. The field is maintained during the electrophoresis and may be homogeneous or inhomogeneous, alternating or nonalternating, where the angle between the two directions will normally be 60° or greater and may be 90°, 120°, or other angles. The gel is supported in a reservoir containing a buffered medium and located within the closed contour of the electrode array. One or more samples are loaded near one end of the gel. The gel is positioned within the electrode array to provide the proper migration direction for the particle(s). For the most part, gels will be rectangular.

The field is applied to the gel, where the buffered medium may be circulated and cooled. The field is maintained for a sufficient time to ensure the desired migration distance of the particle(s) to obtain at least sufficient resolution of the particles.

The first embodiment of the subject invention to be discussed is the homogeneous field with alternating electric fields of either the same or different field strength.

The electrophoretic separation of large macromolecules, such as DNA chromosomes of up to at least 2 megabases, is most efficiently made using a contour-clamped homogenous electric field in alternating orientations.

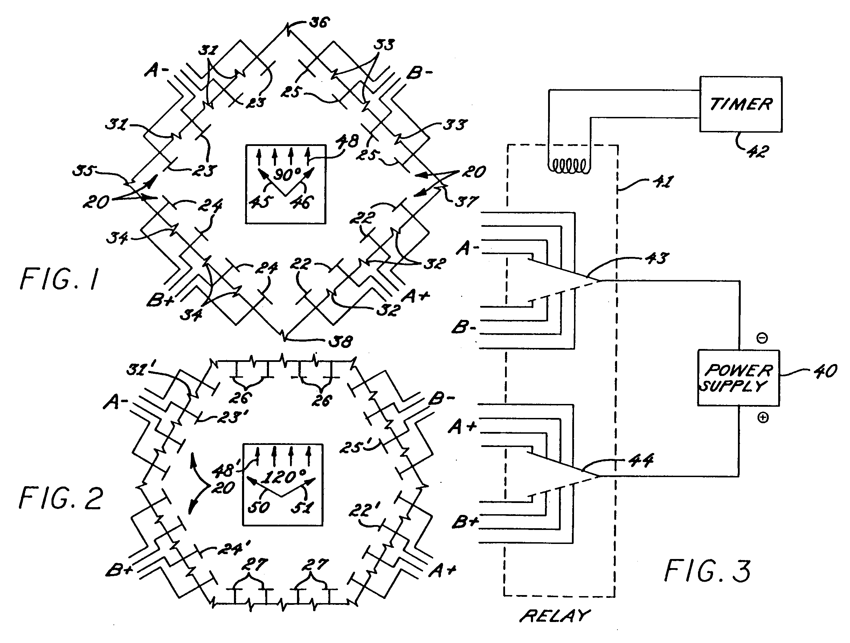

Two exemplary devices useful in explaining certain principles of the invention are illustrated in Figs. 1 and 2. Both devices apply to a contour-clamped homogenous electric field alternating between two directions by virtue of the location of a series of electrodes generally indicated at 20. As is apparent from the drawings, the contours of both devices are closed, the Fig. 1 device in the form of a square and the Fig. 2 device in the form of a hexagon. As already indicated, the polygonal contour, however, need not be a square or hexagon; indeed, electrodes arranged along other contours can be used so long as the multiple electrodes are arranged on a closed contour, have at least a pair of parallel sides, and are clamped to appropriate potentials.

The structure of the apparatus used in the present invention will become more apparent by closer reference to Fig. 1. The electrodes 20 are suspended in a buffer tank (not shown) and immersed in a buffer solution. The buffer solution can be circulated and cooled in conventional fashion. A sample holder, such as a sandblasted glass plate is postioned in the buffer tank so that the direction of travel of the chromosomes will be parallel to the plate edges. The gel is deposited on the surface of the sample holder, and inserts containing the molecules to be separated are loaded into wells formed in the gel.

The electrodes 20 are preferably equally spaced as illustrated and positioned around the closed contour within which the field is to be created. They can be formed, for example, of 0.76 mm (0.030 inch) diameter platinum wire and as noted above are suspended in the buffer solution. The electrodes may be point or line sources positioned in the plane of or normal to the plane of movement of the nucleic acids. The electrodes of the Fig. 1 embodiment can be considered as two pairs, the electrodes 22, 23 forming what can be considered the A pair, and the electrodes 24, 25 comprising the B pair.

The electrodes may be positioned in a variety of ways, displaced from the gel or abutting the gel. Usually, for alternating fields, the electrodes will be displaced from the gel with the interelectrode distances desirably being less than the distance of the electrodes from the gel.

In accordance with the invention, one of the pairs, such as the A pair, is energized or clamped to a potential difference $\phi_0$, while the other pair, such as the B pair, serves as intermediate electrodes which are clamped to potentials which control the uniformity of the field between the first pair. The Fig. 1 embodiment is arranged to alternate the field between two orientations. When it is desired to alternate between the condition just described and its alternate, the B pair is clamped to the potential difference $\phi_0$ while the A pair serves as intermediate electrodes which are clamped at intermediate potentials to assure the uniformity of the field created between the B pair.

The manner in which that is accomplished will now be described. First of all, it is seen that each electrode, in addition to being connected to its A or B supply, is also connected to its neighbors by a resistor. Resistors 31 interconnect the A- electrodes, resistors 32 the A+ electrodes, resistors 33 the B-electrodes, and resistors 34 the B+ electrodes. In addition, resistors 35, 36, 37 and 38 interconnect the respective A pairs and B pairs as illustrated.

For applying potentials to the electrodes, a switched power supply illustrated in Fig. 3 is connected to the electrodes corresponding to the A and B designations. The switched power supply includes power supply 40 having positive and negative terminals connected to a relay, preferably an electronic relay, schematically illustrated at 41. The relay is driven by a timer 42 which controls the conducting or nonconducting state of a series of electronic switches which in turn are connected to the electrodes of Figs. 1 or 2. For the sake of simplicity, the relay is illustrated as a mechanical relay, but the manner in which appropriate shift registers, diodes and power transistors are to be configured will be apparent from the following description. It is seen that the negative terminal of the power supply is connected to a switch 43 which, in the solid line position, connects the negative terminal to the A- electrodes and in the alternate dashed line position connects the negative terminal to the B- electrodes. Similarly, the positive terminal of the power supply is connected to a switch 44 which in the illustrated solid line position connects the positive terminal to the A+ electrodes and in the alternate dashed line position connects the positive terminal of the power supply to the B+ electrodes. The timer 42 causes the contacts to switch positions at predetermined intervals such as, for example, in the range of about 20 to 200 seconds.

With the terminals in the illustrated position, the potential difference from the power supply, designated $\phi_0$ herein, is applied to the A+ to the A- electrodes creating a field in the direction illustrated by the arrow 45. Thus, the A set of terminals has the potential $\phi_0$ imposed thereacross to create a field in the illustrated direction. For the purpose of making the field uniform, the B terminals serve as intermediate electrodes by virtue of their connection across the A electrodes by the resistors 36, 33 and 37 for the B- set and 35, 34 and 38 for the B+ set. In one configuration, the resistors used were each of 820 ohms, 2 watts, and each intermediate electrode was therefore clamped to the appropriate potential which caused the field between the A+ and A- electrodes to be of substantially uniform value throughout the area encompassed by the electrodes. When it is desired to switch the direction of the field, the timer 42 (Fig. 3) causes the switches 43, 44 to switch to their alternate position at which point the B set of electrodes is clamped to the potential difference $\phi_0$ whereas the A set of electrodes, by virtue of their intermediate resistors, serve as the intermediate electrodes to make the field uniform in the direction 46 created between the B pair of electrodes.

It is known that periodic alternation of the field direction serves to separate particles or molecules larger in size than those capable of being separated without alternation. For example, Cantor et al. U.S. patent 4,473,452 describes a square array using an alternating field. However, the field is created between a single electrode on one side of the sample and a linear array of electrodes on the other. Thus, different parts of the gel are subjected to different reorientation angles by virtue of the gradient created between the single electrode on one side and the array on the other.

In accordance with the present invention, there is no gradient. In other words, the field is uniform between the electrodes clamped at the potential difference $\phi_0$. Thus, in the square array of Fig. 1 when the field alternates between the A pair and the B pair, the entire gel is subjected to a reorientation angle of 90° independent of position. As a result, all positively charged molecules are caused to move in the direction which bisects the 90° reorientation angle, as illustrated by the set of equal size arrows 48. Nucleic acids having a negative charge would move in the opposite direction.

With the 90° reorientation angle there is relatively quick movement of DNA down the gel together with a loss of resolution. However, when the reorientation angle is increased to 120°, it is possible to obtain excellent resolution of DNA over the entire range of sizes encountered, extending up to two megabases, with either fragmented or intact DNA molecules.

Accordingly, the apparatus of Fig. 2 is configured to provide a reorientation angle of 120°. In Fig. 2, it is seen that the closed contour is in the form of a hexagon and opposed sets of equally spaced electrodes are disposed on each side of the hexagon. There is illustrated an A set of electrodes 22', 23', a B set 24', 25', and an additional set 26, 27. As in the Fig. 1 embodiment, resistors (e.g., resistor 31') are connected between each pair of adjacent electrodes to close the contour. In the Fig. 2 embodiment, resistors of 470 ohms, 2 watts, were used. The arrows 48' indicate the direction of travel of positive particles. Nucleic acids or other negatively charged particles migrate in the opposite direction.

When the A set of electrodes is clamped at the potential difference $\phi_0$, the field is in the direction illustrated by arrow 50. In that condition, all of the electrodes 24', 25', 26, 27 act as intermediate electrodes to make the field established between the A pair of electrodes more uniform. Similarly, when the power supply of Fig. 3 switches to clamp the B pair of electrodes at potential difference $\phi_0$, the A pair as well as the additional pair 26, 27 all act as intermediate electrodes clamped at potentials suitable to make the field between the B electrodes, the direction of which is illustrated by the arrow 51, more uniform. The Fig. 2 configuration has the advantage over the Fig. 1 configuration of additional intermediate electrodes, providing eight in the illustrated embodiment as opposed to the four shown in the Fig. 1 embodiment.

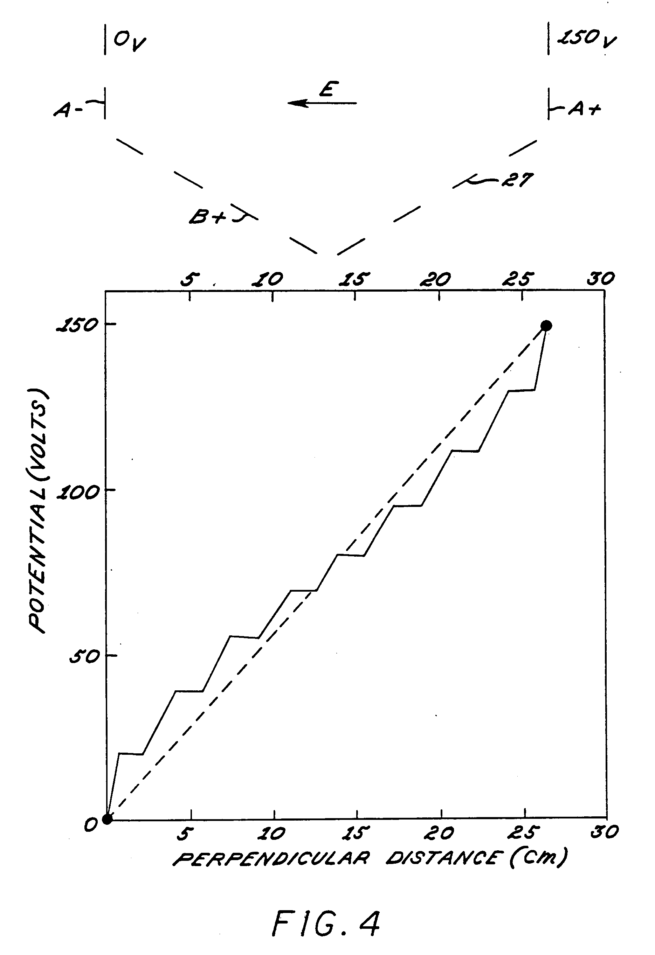

Referring briefly to Fig. 4, the uniformity of the field thus achieved is illustrated. Fig. 4 shows the potential (in volts) as a function of the perpendicular distance to the $\phi_1$ electrodes in the embodiment of Fig. 2, i.e. normal to the $\phi_1$ electrodes.

At the upper portion of Fig. 4, there are schematically illustrated the electrodes, assuming that the A pair has $\phi_0$ clamped thereacross, $\phi_0$ being 150 volts in this instance. In that case, the B+ electrodes 24' and the additional electrodes 27 act as intermediate electrodes to make the field more uniform. Thus it is seen, referring to the graph that at the A+ electrode the potential is indeed 150 volts and at the A- electrode the potential is zero volts. The sawtooth line joining those two points illustrates the effect achieved by the device in practice. The dashed line shows the ideal potential profile for a completely uniform electric field. It is apparent that with only eight intermediate electrodes the ideal is approached quite closely, as will be apparent from inspection of the results achieved by the present invention.

The pattern of chromosome separation changes dramatically with the reorientation angle of the electric field. In the Carle and Olsen apparatus, different parts of the gel are subjected to different reorientation angles, mostly in the range of 120° to 150°. In the hexagonal array, the angle is 120°, and in the square array, it is 90°. When the reorientation angle of the field is 120°, it is possible to obtain excellent resolution of DNA over the entire range of sizes extending up to 2 megabases, while larger molecules may require a different reorientation angle. At 90°, there is a dramatic increase in the movement of the DNA down the gel and a concomitant loss in resolution. At 60°, the chromosomes move even faster and none are well resolved.

The pulse times and voltages will vary with the size of the molecules to be resolved, pulse times being longer with larger DNA molecules. Pulse times will generally be in the range of 1 second to several hours, more usually in the range of 5 seconds to 60 minutes. The voltages will generally be in the range of 50 to 400 volts.

Field inversion gel electrophoresis has been applied to the separation of yeast chromosomal DNA. G.F. Carle, N. Frank, and N.V. Olson, Science, 232, 65 (1986). The electric field is periodically inverted so that a single pair of electrodes can be used to generate homogenous electric fields. The reorientation angle is necessarily confined to 180°. While the system produces good resolution of large DNA, with a pattern of separation generally independent of position across the gel, for some pulse times the migration of the DNA is not a monotonic function of size, leading to the unwanted comigration of molecules that differ greatly in size. The problem can only be avoided by choosing an appropriate range of pulse times during electrophoresis.

By comparison, the present invention alternating in orientation with a single pulse time can produce excellent resolution of large DNA. It appears that the monotonic relationship between migration and molecular weight is generally preserved through the use of the present invention. Thus, the physical parameters of field strength, reorientation angle, and pulse time can be varied independently in a controlled manner unlike in the field inversion gel electrophoresis technique.

In the next embodiment, homogeneous nonalternating configurations are exemplified. The electrophoretic separation of smaller macromolecules, such as DNA of less than 50 kilobases, is most efficiently made using the contour-clamped homogenous electric field of the present invention in a nonalternating configuration.

In the conventional electrophoresis of DNA of less than 50 kilobases, higher voltages can be used to accomplish adequate resolution in a shorter period of time. One disadvantage of this approach, however, is that the migration pattern across the gel is distorted. The DNA molecules migrate more slowly at the edge of the gel than in the center, with the effect most pronounced at smaller molecular weights.

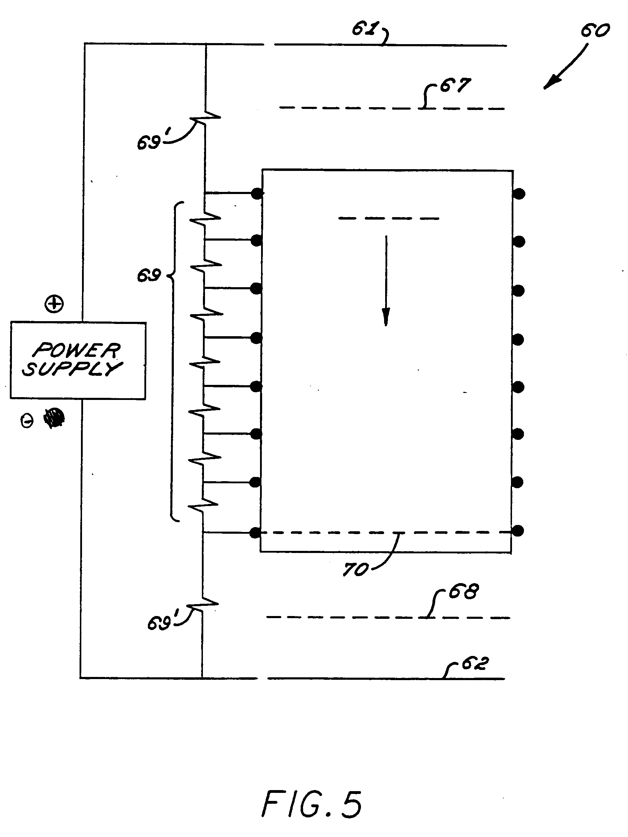

This problem can be eliminated by using the present invention. Figure 5 shows the modification of a standard horizontal gel apparatus 60 in accordance with the principles of the present invention. The gel and electrode configuration are drawn in appropriate relative proportion. The standard horizontal gel apparatus described in T. Maniatis, E.F. Fritsch, and J. Sambrook, Molecular Cloning: A Laboratory Manual, 153 (Cold Spring Harbor Laboratory, 1982), has two main electrodes, the positive 61 and negative 62 electrodes, submerged in wells at the end of the buffer tank. The standard apparatus was modified by adding eight new intermediate electrodes in two sets oriented perpendicular to the plane of the gel and on the sides of the apparatus joining the main electrodes 61, 62. The electrode array defines a closed contour surrounding the gel. In a buffer tank of uniform depth, the equivalent electric field would be generated by electrodes substantially closer to the ends of the gel. This equivalent electrical position is indicated by the broken lines 67, 68 in Fig. 5 to give an indication of the contour geometry. The electric field is controlled by clamping the electrodes to potentials through a series of variable resistors 69, 69′ connected across the main electrodes 61, 62. It will be understood from the dashed line 70 connecting the lower pair of terminals, that each corresponding pair is interconnected so that the same potential is clamped at equivalent positions on both sides of the gel. In the illustrated apparatus, a uniform field was created by utilizing resistors of 960 ohms for the resistor 69′ and 470 ohms for each of the resistors 69. Use of this device allows for the high resolution, nondistorted separation in a short period of time of particles at high voltage.

In the next embodiment, the use of inhomogeneous non-alternating fields is exemplified. By changing the values of the resistors connecting the electrodes along the contour, this device may be altered to generate any desired field strength gradient in appropriate circumstances.

A negative field strength gradient (i.e. one in which the magnitude of the electric field is less near the $\phi_1$ driving electrodes than the the $\phi_2$ driving electrodes) produces a number of effects on the migration of the DNA. First, the mobility of the DNA decreases as it moves through the gel. Electrophoresis can be prolonged without losing the smaller DNA molecules, thus permitting increased resolution of the larger DNA. Second, the negative gradient counteracts band broadening, with the benefit most pronounced for low molecular weight species. Band broadening is the result of multiple factors, including diffusion, convective flows induced by uneven heating, and eddy migration caused by the multiplicity of migration routes through the gel stabilizer. A suitably strong negative field gradient will focus the band because the leading edge of the band is subjected to a weaker electromotive force than the trailing edge. Third, the migration of the DNA takes a curvilinear trajectory with a progressive increase in the width of the lanes down the gel. The incorporation of a negative gradient in electric field strength necessarily introduces a divergence in the field direction. Thus there are two possible applications of negative field strength gradients: a weak gradient adjusted to counteract band broadening can improve resolution; a strong gradient adjusted to keep small DNA molecules on the gel can provide more time to separate larger molecules on the same gel. The effect of a controlled negative field gradient will be demonstrated in Example 3 below.

The present invention thus provides a means whereby large macromolecules can be separated without distortion with a contour-clamped homogenous electric field in alternating orientations, smaller macromolecules can be separated without distortion even at high voltage with a nonalternating contour-clamped homogenous electric field, and either decreased band broadening or differential resolution can be achieved with a contour-clamped electric field with a negative field gradient.

In the next embodiment, homogeneous alternating fields of alternating or different field strengths is exemplified. It should be noted that secondary structure in macromolecules such as DNA might also be identified by the method of the present invention. Biological systems can generate DNA molecules in the form of supercoiled circles, nicked circles, branched DNA, and lariats. Such molecules display anomalous mobility shifts with respect to linear DNA in response to voltage changes. The contour-clamped homogenous electric field of the present invention can be used to separate DNA with secondary structure from a mixture of linear DNA. A sample can be run in a homogenous field at one voltage in one dimension and at a different voltage in the other dimension. DNA with secondary structure will appear as spots displaced from the arc of linear molecules. The field orientation can be switched electronically, eliminating the need to manipulate the gel as is done in two dimensional electrophoresis. Furthermore, the field can be switched in intervals, and the run terminated once the desired separation has been achieved. The device in Fig. 1 can be used to achieve the desired effect by the simple modification of adding four equal resistors at the B+ terminals to make the voltage across the B electrodes smaller than that across the A electrodes.

The following examples further illustrate the present invention but, of course, should not be construed as in any way limiting its scope.

Example 1

This example compares the gel electrophoresis of yeast chromosomal DNA in accordance with the present invention using an alternating electric field with the conventional orthogonal-field-alternation gel electrophoresis (OFAGE) such as is illustrated in G.F. Carle and N.V. Olsen, Nucleic Acids Res. (1984) 12:5647.

Chromosomal DNA was prepared from S. cerevisiae, strain YNN295 as described in D.C. Scwhartz and C.R. Cantor, Cell, 37, 67 (1984), except that the agarose inserts were washed with 50 mM EDTA, pH 8, after detergent and proteinase K treatment. The gels were formed from 35 ml of 1% agarose (Baker standard low electroendosmosis, A426-5) in an electrophoresis buffer 0.5X TBE (45 mM Tris, 45 mM boric acid, and 1.25 mM EDTA, pH 8.3) poured onto a sand blasted glass plate (10.5 x 10.5 x 0.2 cm). The molten agarose was confined to the plate by surface tension. Wells in the gel were made with a thin comb 0.76 mm (0.030 inches). Agarose inserts containing chromosomal yeast DNA were melted at 65°C for five minutes and loaded into the wells with a glass micropipet.

The yeast chromosomal DNA was subjected to electrophoresis with: (a) the OFAGE apparatus for 48 hours, (b) the hexagonal array apparatus of the present invention for 24 hours, and (c) the square array configuration of the present invention for 15.5 hours.

The OFAGE apparatus is disclosed in G.F. Carle and N.V. Olsen, 1984, supra. The hexagonal array and square array contour-clamped homogeneous electric field apparati were those depicted in Figs. 1 and 2 and described above. The electrodes consisted of 0.76 mm (0.030 inch) diameter platinum wire and were suspended in the buffer. The electrodes were clamped to the appropriate potentials through a series of 470 ohms/2 watt resistors for the hexagonal array and 820 ohms/2 watt resistors for the square array. A GraLab Model 451 digital timer/intervalometer was used to drive the switching relay to generate the electric fields in alternating orientations. The buffer was circulated around the gel, as described in G.F. Carle et al., and cooled to 90°C by passage through a coil of silicone tubing placed in a Haake A81 water bath.

The gels were run under similar conditions to facilitate comparison: the field was reoriented every 80 seconds and the field strength was 6 volts/cm. In the OFAGE apparatus the electric field strength is nonuniform and was nominally defined as the voltage divided by the perpendicular distance between the electrode pairs.

Following electrophoresis, the gels were stained in 0.5 $\mu$g/ml ethidium bromide and photographed. The following bands were identified by Southern blot using specific sequence probes: chromosome II, LYS2; chromosome IV, CEN4; and chromosome XII, GAL2. The chromosome I band was identified on the basis that it has been reported to be the highest mobility band. See, e.g., D.C. Schwartz and C.R. Cantor, Cell, 37, 67 (1984), and G.F. Carle and N.V. Olson, Proc. Natl. Acad. Sci. U.S.A., 82, 3756 (1985).

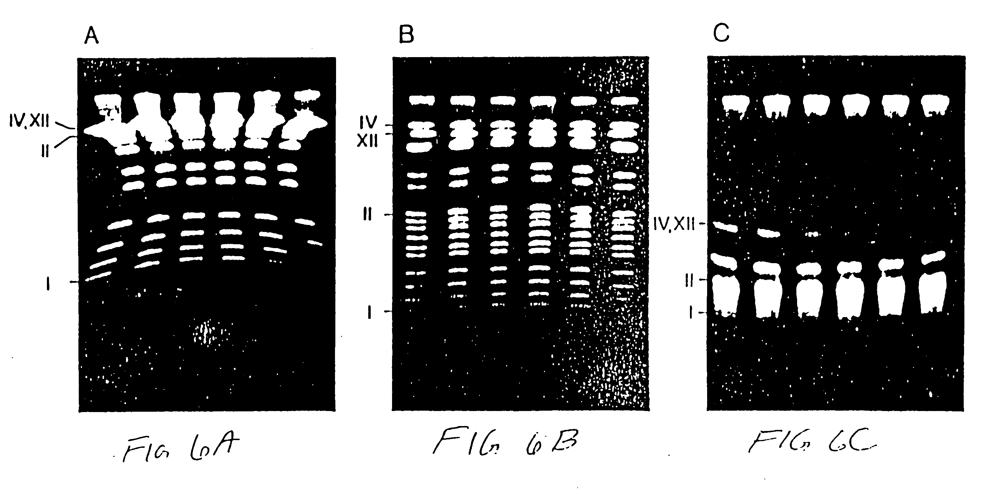

The results of the three electrophoretic separations are set forth in the photographs of Fig. 6. While the conventional technique (see Fig. 6A) and the present invention (Figs. 6B and 6C) were both capable of separating yeast chromosomal DNA, the pattern of separation resulting through the use of the present invention is quite distinct from that resulting from the use of the OFAGE apparatus. Specifically, use of the present invention (see particularly Fig. 6B) led to a pattern of separation which was independent of position across the gel, and thus comparison between multiple samples could be made with confidence through the use of the present invention. The uniformity of separation across the gel using the square array (Fig. 6C) of the present invention was somewhat less than that utilizing the hexagonal array. This is believed to be the result of the potential in the square array being clamped at only four electrodes between the driving electrodes compared to eight such electrodes in the hexagonal array.

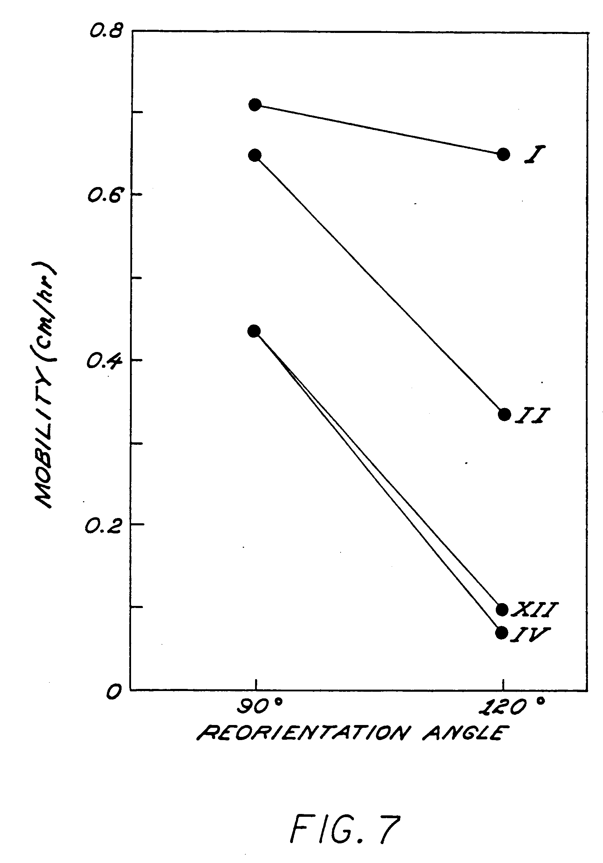

The pattern of chromosome separation changes dramatically with the reorientation angle of the electric field. In the OFAGE apparatus, different parts of the gel are subject to different reorientation angles, mostly in the range of 120° to 150°. In the hexagonal array of the present invention, the angle is 120°, and in the square array, it is 90°. The graph of Fig. 7 displays the mobility of chromosomes I, II, IV and XII as a function of reorientation angle of the electric field. The average mobility was calculated by taking the net migration distance of the bands, multiplying by a correction factor (square root of 2 for the square array, and 2 for the hexagonal array) to compute the true migration distance in the alternating field, and dividing by the running time of the gel. As is apparent from this graph, at 90° there was a dramatic increase in the movement of the DNA down the gel as compared to 120°. Although not shown in the graph, at 60° the chromosomes moved even faster. A comparison of photographs B and C of Fig. 6 involving reorientation angles of 120° and 90°, respectively, demonstrate the lower mobility and concomitant increase in resolution associated with the larger orientation angle.

Example 2

This example compares the gel electrophoresis of DNA fragments of varying size in the range of 75 to 12,216 bp (molecular weight markers, Betheseda Research Laboratories 5615 SA/SB) using: (a) conventional apparatus and conditions, (b) conventional apparatus and buffer recirculation, and (c) conventional apparatus modified in accordance with the present invention as described above with buffer recirculation.

The apparatus of Fig. 5 was used with the resistances 69′ of 960 ohms and resistances 69 of 470 ohms. The resistances at the ends were about two-fold higher than those in between, reflecting the increased electrical distance between the driving electrodes 61, 62 and the first of the intermediate electrode pairs as shown in Fig. 5. The gels of 0.7% agarose were run in 0.5X TBE containing 0.5 $\mu$g/ml ethidium bromide at 7.25 volts/cm for 110 minutes.

It was found that when the apparatus was run in the conventional manner, i.e., with the intermediate electrodes absent, the migration pattern was distorted. When the buffer was recirculated across the top of the gel, there is a redistribution of the uneven heating in the gel and some improvement in the migration pattern; however, distortion was still apparent. In contrast, when the buffer was recirculated and the array of intermediate electrodes was added to generate a contour-clamped homogenous electric field in accordance with the present invention, migration of the DNA was uniform to the very edge of the gel. The present invention in conjunction with the effective heat dissipation resulting from the recirculation of the buffer permitted the rapid resolution of DNA without significant distortion.

Example 3

To further demonstrate how controlled contour clamped electric field gradients can effect the electrophoretic separation of DNA, the apparatus of Fig. 5 was again used along with the gel and DNA fragments of Example 2. The resistors connecting the electrodes along the contour, however, were changed to clamp the electrode potentials in a different pattern from that used in Example 2. The resistances from the negative pole 61 to the positive pole 62 were: (a) 820, 390, 330, 270, 180, 120, 82, 51, and 100 ohms, (b) 960, 470 x 7, and 960 ohms, and (c) 100, 51, 82, 120, 180, 270, 330, 390, and 820 ohms. The field strength, computed as the slope of the potential curve (a) decreased from 7.76 to 1.0 volts/cm, (b) remained constant at 7.25 volts/cm, and (c) increased from 1.0 to 7.76 volts/cm, respectively, as the DNA moved through the gel. Thus the field strength gradients were negative, zero, and positive, respectively. The gels were run with 200 volts across the driving electrodes for 180, 120, and 200 minutes, respectively.

It was found that the negative field gradient produced a number of effects on the migration of the DNA: the mobility of the DNA decreased as it moved through the gel, band broadening decreased with the effect most pronounced for low molecular weight species and the migration of the DNA took a curvilinear trajectory with a progressive increase in the width of the lanes down the gel.

The results of the use of the zero and positive field gradient gels were included in this example to emphasise the above effects by comparison. As in Examples 1 and 2, the zero gradient produced uniform separation across the gel, but did not separate the larger fragments quite as well as the controlled contour clamped negative gradient. With the positive gradient, the separation of smaller fragments was clearly favored at the expense of larger fragments. Band broadening was exacerbated, especially for smaller molecular weights. Finally, the trajectory of the DNA caused a decrease in the width of the lanes down the gel.

It should be understood that the laboratory devices discussed herein and the particular applications set forth in Examples 1-3 are only specific examples which are convenient for explaining the present invention. Numerous variations are possible and are within the scope of this invention.

Because contour-clamped electric fields can be used to control the electrophoretic separation of DNA in ways not accessible to previous methods, the present invention may have application to a broad range of other problems in the separation of macromolecules.

Although the foregoing invention has been described in some detail by way of illustration and example for purposes of clarity of understanding, it will be obvious that certain changes and modifications may be practiced.

**Claims**

1. A method for the separation or detection of particles responsive to an electric field by migration in a gel , said method comprising:

   loading a sample containing said particles near one end of said gel; and

   applying either a homogeneous or an inhomogeneous electric field to said gel, by clamping an array of electrodes arranged in a closed contour surrounding the gel to predetermined electric potentials, wherein the general orientation and magnitude of said electric field is determined by clamping at least two electrodes, the driving electrodes, in the array to different electric potentials, and said electric field is made either homogeneous or inhomogeneous by clamping the remaining at least two electrodes, the intermediate electrodes to predetermined intermediate potentials;

   to cause the particles to migrate in the said gel.

2. A method according to claim 1, wherein the clamping is such that the electric field is homogeneous in direction and magnitude between the driving electrodes.

3. A method according to claim 1, wherein the clamping is such that the electric field is predeterminedly inhomogeneous in direction and magnitude between the driving electrodes.

4. A method according to claim 1 or claim 2, wherein said electric field is alternated between at least two orientations.

5. A method according to claim 4 wherein said electric field is of equal magnitude in each orientation.

6. A method according to claim 4 wherein said electric field is of unequal magnitude in at least one orientation.

7. An apparatus for electrophoretic separation or detection of particles responsive to an electric field having

   a support for a gel medium in which one or more samples containing particles can be placed and

   an array of at least four electrodes arranged in a closed contour around said gel medium, at least two of the electrodes being clamped to different electric potentials to establish the general orientation and magnitude of an electric field, characterized in that the remaining at least two electrodes are clamped to predetermined intermediate potentials to make the electric field in said gel medium homogeneous or inhomogeneous; and

   means are provided for maintaining the electrodes at their respective clamped potentials thereby making the electric field homogeneous or predeterminedly inhomogeneous to effect migration of the particles.

8. An apparatus according to claim 7 wherein said closed contour is a polygon.

9. An apparatus according to claim 8 wherein said polygon has 4 or 6 sides.

10. An apparatus according to any of claims 7, 8, or 9 in which each remaining electrode is clamped to an intermediate potential $\phi$ defined by

$$\phi = \frac{y}{a}(\phi_2 - \phi_1) + \phi_1$$

where $\phi_1$ and $\phi_2$ are the potentials of the driving electrodes, with $\phi_1$ being the lower potential, 'a' is the perpendicular distance between the driving electrodes, and 'y' is the perpendicular distance between that particular remaining electrode and the lower potential driving electrode.

11. An apparatus according to any of claims 7, 8, 9 or 10 wherein said means for maintaining said electrodes at their respective clamped potentials alternates said electric field between at least two different orientations.

12. An apparatus according to claim 11 wherein the magnitude of said electric field is the same in each orientation.

13. An apparatus according to claim 11 wherein the magnitude of said electric field is different in each orientation.

14. An apparatus according to any of claims 7 to 13, wherein resistors are connected between adjacent remaining electrodes.

15. An apparatus according to any one of claims 7 to 14 including reservoir means for maintaining a fluid in contact with the gel medium.

16. An apparatus according to claim 15, including circulating and cooling means for circulating and cooling the fluid.

**Patentansprüche**

1. Verfahren zur Trennung oder Bestimmung bzw. Detektion von Teilchen, die auf ein elektrisches Feld ansprechen, durch Wanderung bzw. Migration in einem Gel, wobei das genannte Verfahren umfaßt:
   das Laden einer die genannten Teilchen enthaltenden Probe nahe einem Ende des genannten Gels; und
   das Anwenden entweder eines homogenen oder eines inhomogenen elektrischen Feldes auf das genannte Gel, durch Klemmen einer Anordnung von Elektroden, die in einer geschlossenen Außenlinie das Gel umgebend angeordnet sind, an vorherbestimmte elektrische Spannungen, worin die allgemeine Ausrichtung und Größe des genannten elektrischen Feldes durch Klemmen von zumindest zwei Elektroden, den Antriebselektroden, in der Anordnung an verschiedene elektrische Spannungen bestimmt wird und das genannte elektrische Feld entweder homogen oder inhomogen gemacht wird, indem die verbleibenden zumindest zwei Elektroden, die Zwischenelektroden, an vorherbestimmte Zwischenspannungen geklemmt werden;
   um zu bewirken, daß die Teilchen im genannten Gel wandern.

2. Verfahren nach Anspruch 1, worin das Klemmen so ist, daß das elektrische Feld in Richtung und Größe zwischen den Antriebselektroden homogen ist.

3. Verfahren nach Anspruch 1, worin das Klemmen so ist, daß das elektrische Feld zwischen den Antriebselektroden in Richtung und Größe vorherbestimmt inhomogen ist.

4. Verfahren nach Anspruch 1 oder 2, worin das genannte elektrische Feld zwischen zumindest zwei Ausrichtungen abwechseln gelassen wird.

5. Verfahren nach Anspruch 4, worin das genannte elektrische Feld in jeder Ausrichtung die gleiche Größe aufweist.

6. Verfahren nach Anspruch 4, worin das genannte elektrische Feld in zumindest einer Ausrichtung eine ungleiche Größe aufweist.

7. Vorrichtung zur elektrophoretischen Trennung oder Bestimmung bzw. Detektion von Teilchen, die auf ein elektrisches Feld ansprechen, aufweisend
   einen Träger für ein Gelmedium, in das eine oder mehrere, Teilchen enthaltende Proben placiert werden können und
   eine Anordnung von zumindest vier Elektroden, die in einer geschlossenen Außenlinie um das genannte Gelmedium angeordnet sind, wobei zumindest zwei der Elektroden an verschiedene elektrische Potentiale bzw. Spannungen geklemmt sind, um die allgemeine Ausrichtung und Größe eines elektrischen Feldes einzurichten, dadurch gekennzeichnet, daß die verbleibenden zumindest zwei Elektroden an vorherbestimmte Zwischenpotentiale bzw. -spannungen geklemmt sind, um das elektrische Feld im genannten Gelmedium homogen oder inhomogen zu machen; und
Mittel vorgesehen sind, um die Elektroden an ihren jeweiligen geklemmten Potentialen bzw. Spannungen zu halten, wodurch das elektrische Feld homogen oder vorherbestimmt inhomogen gemacht wird, um Wanderung der Teilchen zu bewirken.

8. Vorrichtung nach Anspruch 7, worin die genannte geschlossene Außenlinie ein Polygon ist.

9. Vorrichtung nach Anspruch 8, worin das genannte Polygon 4 oder 6 Seiten aufweist.

10. Vorrichtung nach einem der Ansprüche 7, 8 oder 9, bei der jede verbleibende Elektrode an ein Zwischenpotential bzw. eine Zwischenspannung $\phi$ geklemmt ist, die durch

$$\phi = \frac{y}{a}(\phi_2 - \phi_1) + \phi_1$$

definiert ist, worin $\phi_1$ und $\phi_2$ die Potentiale bzw. Spannungen der Antriebselektroden sind, wobei $\phi_1$ die geringere Spannung ist, "a" der Normalabstand zwischen den Antriebselektroden ist und "y" der Normalabstand zwischen jener besonderen bzw. der bestimmten verbleibenden Elektrode und der Antriebselektrode mit der niedrigeren Spannung ist.

11. Vorrichtung nach einem der Ansprüche 7, 8, 9 oder 10, worin die genannten Mittel zum Halten der genannten Elektroden an ihren jeweiligen geklemmten Potentialen bzw. Spannungen das genannte elektrische Feld zwischen zumindest zwei verschiedenen Ausrichtungen wechseln läßt.

12. Vorrichtung nach Anspruch 11, worin die Größe des genannten elektrischen Feldes in jeder Ausrichtung die gleiche ist.

13. Vorrichtung nach Anspruch 11, worin die Größe des genannten elektrischen Feldes in jeder Ausrichtung verschieden ist.

14. Vorrichtung nach einem der Ansprüche 7 bis 13, worin Widerstände zwischen benachbarten bzw. aneinandergrenzenden verbleibenden Elektroden angeschlossen sind.

15. Vorrichtung nach einem der Ansprüche 7 bis 14, die Reservoirmittel enthält, um ein Fluid mit dem Gelmedium in Kontakt zu halten.

16. Vorrichtung nach Anspruch 15, die Umwälz- und Kühleinrichtungen zum Umwälzen und Kühlen des Fluids enthält.

**Revendications**

1. Méthode pour la séparation ou la détection de particules en réponse à un champ électrique par migration dans un gel, ladite méthode consistant à :
charger un échantillon contenant lesdites particules à proximité d'une extrémité dudit gel ; et
appliquer un champ électrique homogène ou non homogène audit gel, en bloquant une série d'électrodes agencées dans un contour fermé entourant le gel à des potentiels électriques prédéterminés, où l'orientation générale et la grandeur dudit champ électrique est déterminée en bloquant au moins deux électrodes, les électrodes menantes, dans la série à des potentiels électriques différents et ledit champ électrique est rendu soit homogène ou non homogène en bloquant au moins deux des électrodes restantes, les électrodes intermédiaires, à des potentiels intermédiaires prédéterminés ;
pour forcer les particules à émigrer dans ledit gel.

2. Méthode selon la revendication 1, où le blocage est tel que le champ électrique soit homogène dans une direction et une grandeur entre les électrodes menantes.

3. Méthode selon la revendication 1, où le blocage est tel que le champ électrique soit non homogène de manière prédéterminée dans une direction et une grandeur entre les électrodes d'entraînement.

4. Méthode selon la revendication 1 ou la revendication 2, où ledit champ électrique alterne entre au moins deux orientations.

5. Méthode selon la revendication 4, où ledit champ électrique est d'une grandeur égale dans chaque orientation.

6. Méthode selon la revendication 4, où ledit champ électrique est de grandeur inégale dans au moins une orientation.

7. Appareil pour la séparation ou la détection par électrophorèse de particules en réponse à un champ électrique ayant
un support pour un milieu en gel dans lequel on peut placer un ou plusieurs échantillons contenant des particules ; et

une série d'au moins quatre électrodes agencées en un contour fermé autour dudit milieu en gel, au moins deux des électrodes étant bloquées à des potentiels électriques différents pour établir l'orientation générale et la grandeur d'un champ électrique, caractérisé en ce que les au moins deux électrodes restantes sont bloquées à des potentiels intermédiaires prédéterminés pour rendre le champ électrique dans ledit milieu en gel homogène ou non homogène ; et

des moyens sont prévus pour maintenir les électrodes aux potentiels bloqués respectifs et ainsi rendre le champ électrique homogène ou non homogène de manière prédéterminée afin d'effectuer la migration des particules.

8. Appareil selon la revendication 7, où ledit contour fermé est un polygone.

9. Appareil selon la revendication 8, où ledit polygone a 4 ou 6 côtés.

10. Appareil selon l'une quelconque des revendications 7, 8 ou 9, où chaque électrode restante est bloquée à un potentiel intermédiaire $\phi$ qui est défini par

$$\phi = \frac{y}{a} (\phi_1 - \phi_2) + \phi_1$$

où $\phi_1$ et $\phi_2$ sont les potentiels des électrodes menantes, $\phi_1$ étant le plus faible potentiel, "a" est la distance perpendiculaire entre les électrodes menantes et "y" est la distance perpendiculaire entre l'électrode particulière qui reste et l'électrode menantes au plus faible potentiel.

11. Appareil selon l'une quelconque des revendications 7, 8, 9 ou 10, où ledit moyen pour maintenir lesdites électrodes aux potentiels bloqués respectifs fait alterner ledit champ électrique entre au moins deux orientations différentes.

12. Appareil selon la revendication 11, où la grandeur dudit champ électrique est la même dans chaque orientation.

13. Appareil selon la revendication 11, où la grandeur dudit champ électrique est différente dans chaque orientation.

14. Appareil selon l'une quelconque des revendications 7 à 13, où des résistances sont connectées entre des électrodes restantes adjacentes.

15. Appareil selon l'une quelconque des revendications 7 à 14, comprenant un moyen formant réservoir pour maintenir un fluide en contact avec le milieu en gel.

16. Appareil selon la revendication 15, comprenant un moyen de circulation et de refroidissement pour la circulation et le refroidissement du fluide.

FIG. 1

FIG. 2

FIG. 3

TIMER

POWER SUPPLY

RELAY

EP 0 256 737 B1

FIG. 4

FIG.5

FIG 6A

FIG 6B

FIG 6C

FIG. 7